# EUROPEAN PATENT SPECIFICATION

(11) **EP 0 645 493 B1**
(45) Date of publication and mention of the grant of the patent: **02.12.1998**
(21) Application number: 93307633.3
(22) Date of filing: 27.09.1993
(51) Int. Cl.: E01B 31/06

(54) **Railroad rail drilling apparatus and machine**
Eisenbahnschienenbohrgerät und -maschine
Dispositif et machine de perçage pour rails de chemin de fer

(43) Date of publication of application: 29.03.1995
(73) Proprietor: KABUSHIKI KAISHA YAMAZAKI HAGURUMA SEISAKUSHO, Atsugi-shi, Kanagawa-ken (JP)
(72) Inventor: Noda, Hirotoshi, c/o K.K. Yamazaki, Atsugi-shi, Kanagawa-ken (JP)
(74) Representative: Bridge-Butler, Alan James

(56) References cited:
- WO-A-93/25759
- US-A- 3 706 505
- US-A- 3 945 749
- US-A- 4 753 556

## Description

The present invention relates to drilling apparatus and drilling machines, and particularly concerns a device for drilling boltholes for the fastening of connecting plates or fishplates between abutting railroad rails during the laying and repair of railroad track.

Connecting plates are positioned for reinforcement on railroad rails and fastened to them with bolts during the laying of railroad track and the replacement of worn track. During this process, a specified number of boltholes is drilled in the central web of the rail, but since the drilling height and pitch of the bolt insertion holes on the connecting plates are predetermined for each type of rail, holes must be drilled in the rails to match the bolt insertion holes on the connecting plates.

The conventional method of drilling boltholes in railroad rails was to first determine the position of the holes to be drilled in each rail and then make punch marks, after which a drill was directed to the marks and the holes were drilled. Marking and punching each rail is time-consuming and tedious, and the heavy drilling machine is cumbersome. There is thus a demand for a drilling machine capable of simple and rapid operation particularly needed when changing railroad rails in emergencies.

There is known from US-A-4 753 556 a drilling apparatus for repeatedly drilling holes in elongate workpieces, especially a portable rail drill and a light-weight clamping mechanism for securing the apparatus to the rail.

The object of the present invention is to provide a drilling apparatus and a drilling machine for railroad rails which requires none of the marking and punching of conventional rail drilling procedures, and which permits simple and rapid adjustment of the drilling machine on, and drilling of, all types of rail.

According to the present invention there is provided a drilling apparatus for forming transverse bores through the vertical web of a railroad rail, comprising clamping means formed by a locating frame having abutments positioned to engage the surface of the rail at spaced locations, a clamping jaw movable relative to the locating frame, a pair of parallel bars extending from the locating frame in a direction perpendicular to the web of the rail when the locating frame engages the rail, and a body mounted to the bars for reciprocal sliding motion therealong, the body including drive means and a drilling cutter engageable with the rail web to form an opening therein, wherein said clamping jaw is pivotable relative to the locating frame , and wherein a height gauge is secured to the locating frame so as to be adjacent the web of the rail, the height gauge being provided with two laterally spaced medial rail supports for engaging a lower portion of the web and with a plurality of laterally spaced pairs of threaded holes for receiving a further pair of rail supports for engaging beneath an upper bulge of the rail, the holes being positioned according to the designated drilling heights of bolt holes for different types of railroad rails.

A pitch gauge may be provided fixable to the rail and having a plurality of locating recesses spaced in the axial direction of the rail, wherein the locating frame or the clamping jaw includes an embossment or projection sequentially cooperable with the locating recesses to fix the drilling apparatus in a plurality of axially spaced locations along the rail.

Upper rail supports may be secured to the locating frame for engaging the upper bulge of the rail in a lateral direction.

A rotatable clamp screw for operating the clamp jaw may be threaded vertically down through a tapped hole provided at an upper end of the clamp jaw above the axis of the cutter.

The invention also relates to a drilling machine for railroad rails comprising a rotating drive source attached to a drilling cutter and housed in a main body case, the drive source being secured in such a way that an output shaft extends outward; slide shafts positioned on the sides of said main body case with said rotating drive source centred between them; a clamp arm provided with a support shaft permitting it to move freely opposite a locating frame, which is secured to respective ends of said slide shafts, a clamping means being configured by a gripping surface of said locating frame opposite a twin-tined hook member below said clamp arm to grip a railroad rail crosswise and from both sides; an upper rail support facing inward secured on the inside of said gripping surface of said locating frame, wherein a height gauge with a through-hole drilled approximately in its centre is bolted to the inside of said gripping surface; two medial rail supports are juxtaposed on said height gauge as to be separated by a gap, and various screw holes into which upward rail supports can be threaded to position them on said height gauge according to the designated drilling heights of boltholes for each type of railroad rail are provided on said height gauge; a pitch gauge, on which numerous countersinks are positioned in relation to the end of, or a specified spot on, said railroad rail so as to correspond to the pitch designated for said boltholes of each type of railroad rail, is mounted before drilling on the upper surface of said railroad rail to be drilled so as to be readily removable; a clamp screw having a rotating handle is threaded vertically down through a tapped cylinder on the upper end of said clamp arm over the axial centre of said cutter; the lower end of said clamp screw is aligned with a specific countersink on said pitch gauge and tightened to secure the position of the clamp means, and significant pressure is perpendicularly maintained from above and below as well as in a horizontal direction on said railroad rail by the clamp means; a retaining plate is secured on the back ends of said slide shafts; a link mechanism for advancing and retracting said main body case using said retaining plate as a support point and having a rotating handle is positioned between said main body case and said retaining plate; and said cutter mounted on said output shaft is advanced by rotation of the handle of said link mechanism to drill said bolthole in the middle of the rail at a specified height and a specified pitch.

An embodiment of the invention will now be described with reference to the accompanying drawings, in which:
Figure 1 is an exploded perspective view of the drilling machine of the present invention;
Figure 2 is a side view of the clamp means of the present invention;
Figure 3 shows schematically the clamping configuration of the clamp means shown in Figure 2 on the railroad rail;
Figure 4a shows a perspective drawing of the complete drilling machine of the present invention as well as its positioning relative to the pitch gauge mounted on a conventional rail;
Figure 4b is a side view of a railroad rail showing the relative positioning of boltholes drilled in the middle part of the rail;
Figure 5 is a perspective view of the height gauge of the present invention;
Figure 6 is a perspective view of the complete drilling machine of the present invention showing its positioning relative to the pitch gauge mounted on a second, different type of railroad rail; and
Figure 7 is a longitudinal section of the cutter mount portion of the drilling machine of the present invention.

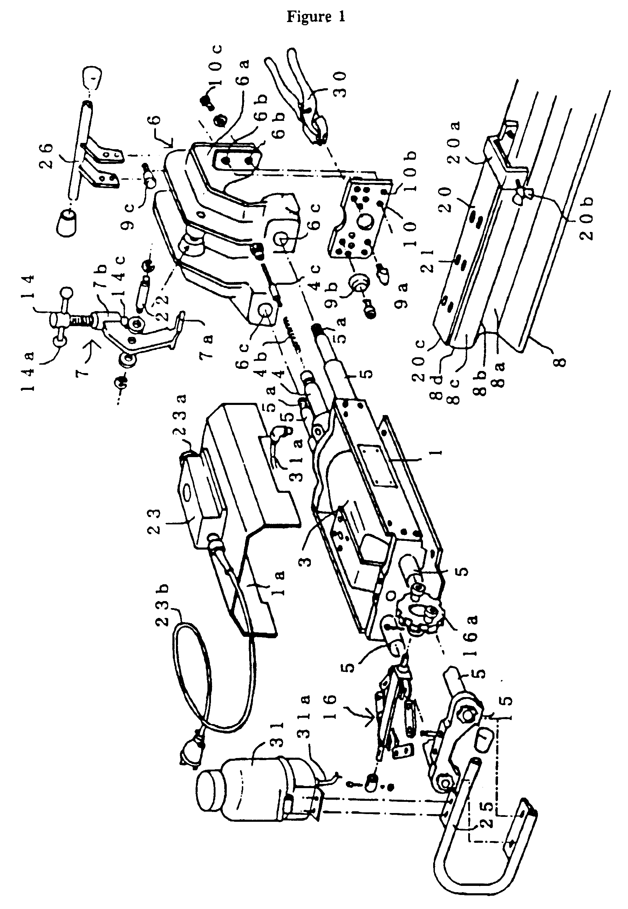

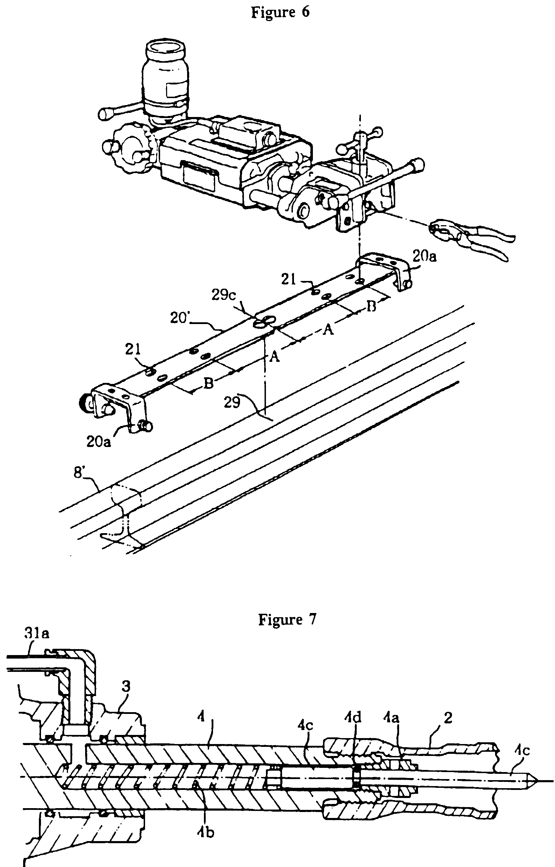

Referring now to Figure 1, the main body case is denoted by 1. A rotary drive source 3 is provided by the electric motor of hole-drilling cutter 2, within main body case 1. Although a petrol engine drive or the like is suitable as rotating drive source 3, the present embodiment employs an electric motor drive. Output shaft 4 of the motor 3 extends outward from main body case 1. As shown in Figure 7, in the mounting of cutter 2, a centre pin 4c is inserted against coiled spring 4b into the inner cavity of output shaft 4. Centre pin 4c is secured through O-ring 4d by the matching threads of centre pin guide 4a. Cutter 2 is secured by tightening its threaded inner portion over the threaded portion provided on the exterior of the front end of output shaft 4.

Cutter 2 is capable of drilling with high efficiency through a railroad rail with a metal borer having a blade on the outer perimeter of the front end of a cylinder. Cutting oil is supplied from a lubricant tank 31 positioned on the back of main body case 1 via a tube 31a to the inside of output shaft 4. During drilling, cutting oil is forced to the forward perimeter of cutter 2 by centre pin 4. A pair of pliers 30 may be used to remove cores that have not been successfully ejected from cutter 2.

The top of main body case 1 is covered by a cover 1a, which is secured by screws. On top of cover 1a is positioned switch 23a and control box 23, to which a power supply cord 23b is connected.

On both sides of main body case 1 are secured slide shafts 5 parallel with and centred about output shaft 4. The ends of slide shafts 5 adjacent output shaft 4 have threaded portions 5a which are anchored with nuts in through-holes 6c of a locating frame 6, which in turn is shaped roughly like an inverted letter 'U' when viewed from the side and having a lengthwise gap in its lower middle portion (as viewed from main body case 1).

A clamp arm 7 is supported by a support shaft 22 allowing it to rotate freely in the lengthwise gap in the middle portion of locating frame 6. A clamping means is configured by opposing gripping surface 6a on locating frame 6 and hook member 7a on the bottom of clamp arm 7, to clamp railroad rail 8 on two sides. However, hook member 7a is formed with two tines (not shown) to avoid interfering with the advance of cutter 2, described further below.

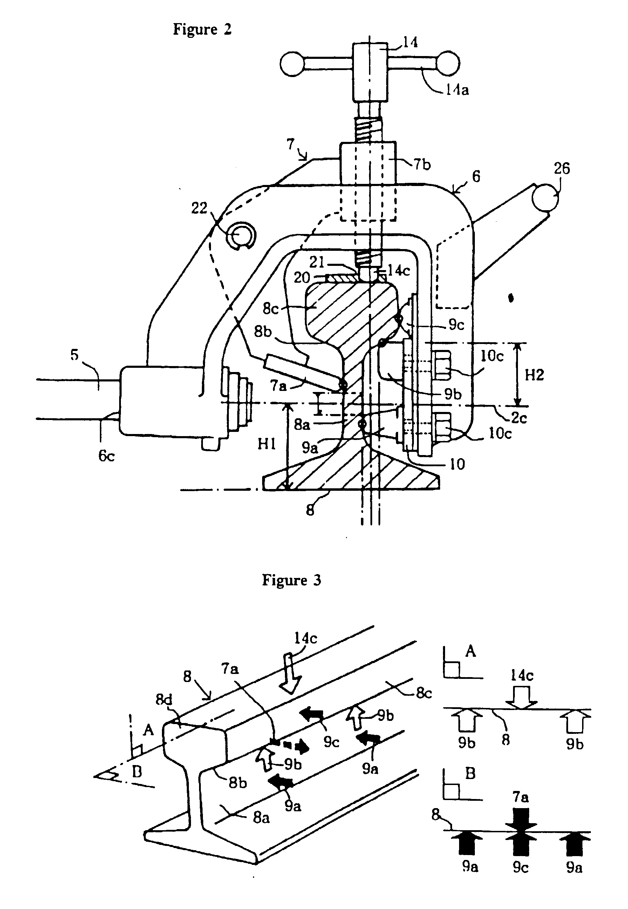

A single upper rail support 9c is secured facing inward on the upper middle inner section of gripping surface 6a of locating frame 6. Height gauge 10 is secured below upper rail support 9c so as to be readily detachable. As shown in Figures 1 and 2, height gauge 10 is secured by inserting bolts 10c from the outer side of gripping surface 6a through insertion holes 6b drilled in gripping plate 6a and in locating frame 6 and tightening the bolts into threaded holes 10a tapped in the four corners of height gauge 10.

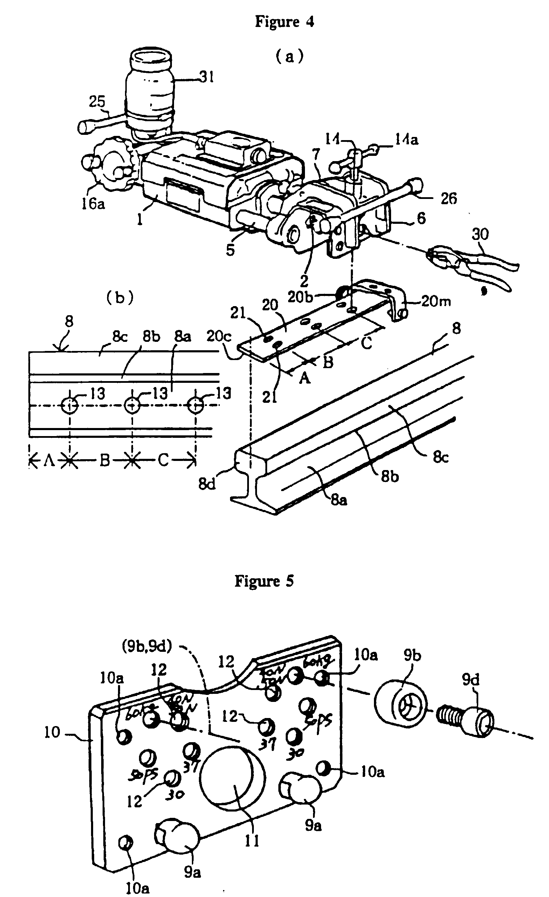

As shown in Figure 5, in addition to threaded holes 10a used to secure height gauge 10, medial rail supports 9a are secured on the lowermost portion of height gauge 10, parallel to each other and separated by a gap, a through-hole 11 being drilled in approximately the centre of gauge 10.

Numerous screw holes 12 corresponding to the different types of rails are also positioned on height gauge 10 so that its left side is symmetrical to its right. A type of rail is indicated for each of screw holes 12. Prior to drilling a rail, two upward rail supports 9b are secured in a parallel manner by threading bolts 9d in the respective screw holes 12 corresponding to the type of rail to be cut.

As shown in Figure 2, clamp screw 14 having a rotating handle 14a is threaded vertically down through tapped guide cylinder 7b positioned on the upper end of clamp arm 7 over the axial centre of cutter 2 which advances perpendicularly with respect to railroad rail 8. By aligning the lower end 14c of clamp screw 14 with a specific countersink 21 on above-mentioned pitch gauge 20 and tightening down clamp screw 14, clamp arm 7 rotates about support shaft 22 so that pressure is maintained on the middle part of the rail 8a by hook member 7a, and significant pressure is perpendicularly maintained from above and below and in a horizontal direction on railroad rail 8.

As shown in Figure 2, when railroad rail 8 is clamped in this manner, upward rail supports 9b engage beneath the upper bulge of the rail 8b against pressure applied by the tightening of clamp screw 14, and the engagement point on the upper bulge of the rail 8b is at a fixed distance H2 from the centre of drilling 2c.

In this manner, the drilling height H1 from the base of railroad rail 8 is determined by the clamping position of the upper bulge of the rail 8b.

In this method of clamping, in the positions and directions of support shown by arrows in Figure 3, the middle part of the rail 8a is horizontally supported at two points by medial rail supports 9a; the upper bulge of the rail 8b is horizontally supported at two points by upward rail supports 9b; and the side of the upper part of the rail 8c is supported at one central point by upper rail support 9c. The various lengths of medial rail supports 9a, upward rail supports 9b, and upper rail supports 9c are arranged such that the gripping surface 6a of locating frame 6 is held in uniform vertical contact with railroad rail 8.

As shown in Figure 2, a vertical line passing through the centre of clamp screw 14 and projected downward through its lower end 14c is approximately equidistant from the contact points with the rail of medial rail supports 9a and upward rail supports 9b, permitting stable tightening of clamp screw 14.

As shown in Figure 4, an end face 20c of pitch gauge 20 is aligned with the end face 8d of railroad rail 8 when mounting pitch gauge 20 on the upper surface of railroad rail 8. Pitch gauge 20 comprises a clamping strip 20a that can fit over the width of railroad rail 8 and is attached on one end of a flat plate. A screw 20b having a knurled or winged head is positioned on one side of clamping strip 20a, permitting screw 20b to be tightened against the side of the upper part of the rail 8c. Depressions or holes, here called 'countersinks' 21, are positioned on the surface of the flat plate of pitch gauge 20 at distances measured from end surface 20c and corresponding to the drilling positions of boltholes 13. Countersinks 21 are positioned crosswise in pairs so that the lower end 14c of clamp screw 14 can be tightened down over railroad rail 8 on either of the countersinks in a pair, i.e. the pitch gauge can be used with the drilling machine positioned on either side of the rail end.

When the railroad rail to be repaired is a Shinkansen rail 8', a pitch gauge for use on Shinkansen or 'Bullet train' track is first made by abutting the end surfaces 29c of two of the above-described pitch gauges 20. The centre 29c of the (new) pitch gauge is then aligned with the cracked portion 29 of the rail and the gauge seated on the rail. Countersinks 21 are also provided in the same manner on pitch gauge 20' for use on Shinkansen rails, which is clamped in a manner identical to that described above.

A retaining plate 15 is secured on the rear ends of slide shafts 5 to the rear of main body case 1. A link mechanism 16 with attached rotating handle 16a is secured between retaining plate 15 and main body case 1.

Main body case 1 can be moved forward and backward along slide shaft 5 by rotating the handle of link mechanism 16. Boltholes 13 are drilled at specified height and pitch in the middle part of the rail 8a by advancing cutter 2, mounted on output shaft 4, between the tines of hook member 7a of clamp arm 7. Handles 25, 26, used to transport the drilling machine, are mounted behind main body case 1 and on the front of locating clamp 6, respectively.

As part of the drilling process, upward rail supports 9b, 9b are secured in the threaded holes 12 appropriate for the type of rail in order to set the drilling height of the bolthole 13 to be drilled. Clamp screw 14 is then tightened onto one of the countersinks 21 on pitch gauge 20 which has been mounted on top of railroad rail 8, and a bolthole 13 is drilled in the middle part of the rail 8a by the rotating cutter 2 when the cutter is advanced. When drilling is complete, the cutter is retracted and clamp screw 14 is then released and retightened on the next countersink 21 and the drilling repeated in this manner a specified number of times to make boltholes 13 of specified pitch and height.

After drilling a hole, the core in cutter 2 is ejected by centre pin 4 which is driven by coiled spring 4b, but spring-powered ejection is sometimes incomplete due to friction with cutter 2 and the like. At such times, the ends of pliers 30 are inserted from the exterior through through-hole 11 to grip the outer edge of the core in cutter 2 and extract it.

As described above, in the railroad rail drilling machine of the present invention the upper bulge of the rail is secured by the specific positioning of the height gauge corresponding to the type of rail to be drilled and a pitch gauge is mounted on a specific position on the rail. By simply tightening a clamp screw onto a countersink on the pitch gauge, the drilling machine is firmly and perpendicularly secured in position from above and below as well as horizontally, and the pitch and height of the bolthole drilling position are set. Once a drilling machine of this type has been clamped in position, drilling is carried out by simply rotating a handle to advance a rotating cutter.

Accordingly, drilling can be completed in an extremely easy and rapid manner without marking and punching each individual drilling position on the rail.

## Claims

1. A drilling apparatus for forming transverse bores through the vertical web of a railroad rail, comprising clamping means formed by a locating frame (6) having abutments positioned to engage the surface of the rail at spaced locations, a clamping jaw (7) movable relative to the locating frame, a pair of parallel bars (5) extending from the locating frame in a direction perpendicular to the web of the rail when the locating frame engages the rail, and a body (1) mounted to the bars for reciprocal sliding motion therealong, the body including drive means (3) and a drilling cutter (2) engageable with the rail web to form an opening therein characterised in that said clamping jaw (7) is pivotable relative to the locating frame, and in that a height gauge (10) is secured to the locating frame (6) so as to be adjacent the web of the rail, the height gauge being provided with two laterally spaced medial rail supports (9a) for engaging a lower portion of the web and with a plurality of laterally spaced pairs of threaded holes (12) for receiving a further pair of rail supports (9b) for engaging beneath an upper bulge of the rail, the holes (12) being positioned according to the designated drilling heights of bolt holes for different types of railroad rails.

2. A drilling apparatus according to Claim 1, characterised in that a pitch gauge (20) is provided fixable to the rail and having a plurality of locating recesses (21) spaced in the axial direction of the rail, wherein the locating frame (6) or the clamping jaw (7) includes an embossment or projection sequentially cooperable with the locating recesses to fix the drilling apparatus in a plurality of axially spaced locations along the rail.

3. A drilling apparatus according to Claim 1 or Claim 2, characterised in that upper rail supports (9c) are secured to the locating frame (6) for engaging the upper bulge of the rail in a lateral direction.

4. A drilling apparatus according to Claim 1, Claim 2 or Claim 3, characterised in that a rotatable clamp screw (14) for operating the clamp jaw (7) is threaded vertically down through a tapped hole (7b) provided at an upper end of the clamp jaw above the axis of the cutter (2).

5. A drilling machine for railroad rails comprising a rotating drive source (3) attached to a drilling cutter (2) and housed in a main body case (1), the drive source being secured in such a way that an output shaft (4) extends outward; slide shafts (5) positioned on the sides of said main body case (1) with said rotating drive source (3) centred between them; a clamp arm (7) provided with a support shaft permitting it to move freely opposite a locating frame (6), which is secured to respective ends (5a) of said slide shafts (5), a clamping means being configured by a gripping surface (6a) of said locating frame (6) opposite a twin-tined hook member (7a) below said clamp arm (7) to grip a railroad rail (8) crosswise and from both sides; an upper rail support (9c) facing inward secured on the inside of said gripping surface (6a) of said locating frame (6), characterised in that a height gauge (10) with a through-hole (11) drilled approximately in its centre is bolted to the inside of said gripping surface (6a); two medial rail supports (9a) are juxtaposed on said height gauge (10) as to be separated by a gap, and various screw holes (12) into which upward rail supports (9b) can be threaded to position them on said height gauge (10) according to the designated drilling heights of boltholes (13) for each type of railroad rail are provided on said height gauge (10); a pitch gauge (20), on which numerous countersinks (21) are positioned in relation to the end of, or a specified spot on, said railroad rail (8) so as to correspond to the pitch designated for said boltholes (13) of each type of railroad rail, is mounted before drilling on the upper surface of said railroad rail (8) to be drilled so as to be readily removable; a clamp screw (14) having a rotating handle (14a) is threaded vertically down through a tapped cylinder (7b) on the upper end of said clamp arm (7) over the axial centre of said cutter (2); the lower end (14c) of said clamp screw (14) is aligned with a specific countersink (21) on said pitch gauge (20) and tightened to secure the position of the clamp means, and significant pressure is perpendicularly maintained from above and below as well as in a horizontal direction on said railroad rail (8) by the clamp means; a retaining plate (15) is secured on the back ends of said slide shafts (5); a link mechanism (16) for advancing and retracting said main body case (1) using said retaining plate (15) as a support point and having a rotating handle (16a) is positioned between said main body case (1) and said retaining plate (15); and said cutter (2) mounted on said output shaft (4) is advanced by rotation of the handle of said link mechanism (16) to drill said bolthole (13) in the middle of the rail (8a) at a specified height and a specified pitch.

## Patentansprüche

1. Bohrvorrichtung zur Herstellung von Querbohrungen durch den senkrechten Steg einer Eisenbahnschiene bestehend aus einer Klemmvorrichtung, die aus einem Paßrahmen (6) mit Streben gebildet ist, die so angeordnet sind, daß die Oberfläche der Schiene an beabstandeten Stellen verbunden wird, einer in Abhängigkeit zu dem Paßrahmen beweglichen Klemmbacke (7), einem Paar parallel verlaufender Stangen (5), die sich von dem Paßrahmen senkrecht zu dem Schienensteg erstrecken, wenn der Paßrahmen die Schiene verbindet, und ferner aus einem an den Stangen angeordneten Körper (1) zum gegenseitigen Verschieben entlang der Stangen, wobei der Körper eine Antriebsvorrichtung (3) und eine Bohrkrone (2) aufweist, die mit dem Schienensteg verbunden wird, um eine Öffnung darin zu bilden, dadurch gekennzeichnet, daß die Klemmbacke (7) in Abhängigkeit zu dem Paßrahmen (6) drehbar ist, daß ein Höhenmaß (10) an dem Paßrahmen (6) neben dem Schienensteg befestigt wird, wobei das Höhenmaß zwei seitlich beabstandete mittlere Schienenstützen (9a) zur Verbindung mit einem unteren Bereich des Stegs und eine Vielzahl von seitlich beabstandeten Paaren von Gewindelöchern (12) zur Aufnahme eines weiteren Paares von Schienenstützen (9b) zur darunterliegenden Verbindung eines oberen Wulstes der Schiene aufweist und die Löcher (12) entsprechend der bezeichneten Bohrhöhen der Bolzenlöcher für die verschiedenen Arten von Eisenbahnschienen positioniert sind.

2. Bohrvorrichtung nach Anspruch 1, dadurch gekennzeichnet, daß ein Abstandsmaß (20) an der Schiene angebracht werden kann und eine Vielzahl von Positionsvertiefungen (21) aufweist, die in axialer Richtung der Schiene beabstandet sind, wobei der Paßrahmen (6) oder die Klemmbacke (7) Erhebungen oder Vorsprünge aufweist, die fortlaufend in die Positionsvertiefungen eingreifen, um die Bohrvorrichtung in einer Vielzahl von axial beabstandeten Positionen entlang der Schiene zu befestigen.

3. Bohrvorrichtung nach Anspruch 1 oder Anspruch 2, dadurch gekennzeichnet, daß obere Schienenstützen (9c) an dem Paßrahmen (6) befestigt sind, um den oberen Wulst der Schiene in seitlicher Richtung zu verbinden.

4. Bohrvorrichtung nach Anspruch 1, Anspruch 2 oder Anspruch 3 dadurch gekennzeichnet, daß eine drehbare Klemmschraube (14) zum Bewegen der Klemmbacke (7) senkrecht nach unten durch ein Gewindeloch (7b) geführt wird, das an einem oberen Ende der Klemmbacke über der Achse der Krone (2) angeordnet ist.

5. Bohrvorrichtung für Eisenbahnschienen bestehend aus einer Drehantriebsquelle (3), die an einer Bohrkrone (2) befestigt und in einen Hauptkörper (1) eingebaut ist, wobei die Antriebsquelle derart befestigt ist, daß sich eine Hauptwelle (4) nach außen erstreckt; Schiebewellen (5) an den Seiten des Hauptkörpers (1) mit der dazwischen angeordneten Drehantriebsquelle (3); einem Klemmarm (7) mit einer Stützwelle zur freien Bewegung im Verhältnis zum Paßrahmen (6), der an den jeweiligen Enden (5a) der Schiebewelle (5) befestigt ist, wobei eine Klemmvorrichtung, die durch eine Greiffläche (6a) des Paßrahmens (6) gegenüber einem Doppelhaken (7a) unter dem Klemmarm (7) so ausgerichtet ist, um eine Eisenbahnschiene (8) kreuzweise und von beiden Seiten zu greifen; sowie aus einer oberen, nach innen gerichteten Schienenstütze (9c), die an der Innenseite der Greiffläche (6a) des Paßrahmens (6) befestigt ist, dadurch gekennzeichnet, daß ein Höhenmaß (10) mit einem ungefähr in der Mitte angeordneten Durchgangsloch (11) mit Bolzen an der Innenseite der Greiffläche (6a) befestigt ist; zwei mittlere Schienenstützen (9a) nebeneinander an dem Höhenmaß (10) mit einem Zwischenraum angeordnet sind, wobei das Höhenmaß (10) mit verschiedenen Gewindelöchern (12) versehen ist, in die aufrecht verlaufende Schienenstützen (9b) zur Positionierung an dem Höhenmaß (10) entsprechend der bezeichneten Höhen der Bolzenlöcher (13) eines jeden Eisenbahnschienentyps geschraubt werden können; ein Abstandsmaß (20), auf dem zahlreiche Vertiefungen (21) im Verhältnis zu dem Ende oder einem bestimmten Punkt auf der Eisenbahnschiene (8) angeordnet sind, um dem bezeichneten Abstand der Bolzenlöcher (13) eines jeden Eisenbahnschienentyps zu entsprechen, vor dem Bohren an der oberen Fläche der zu bohrenden Eisenbahnschiene (8) befestigt wird und leicht wieder abgenommen werden kann; eine Klemmschraube (14) mit einem Drehgriff (14a) senkrecht nach unten durch einen mit einem Gewinde versehenen Zylinder (7b) an dem oberen Ende des Klemmarms (7) über der Achsenmitte der Krone (2) geschraubt wird; das untere Ende (14c) der Klemmschraube (14) mit einer besonderen Vertiefung (21) auf dem Abstandsmaß (20) ausgerichtet und befestigt ist, um die Position der Klemmvorrichtung zu sichern und erheblichen Druck senkrecht sowohl von oben und unten als auch in horizontaler Richtung auf die Eisenbahnschiene (8) durch die Klemmvorrichtung auszuüben; eine Halteplatte (15) an den hinteren Enden der Schiebewellen (5) befestigt ist; ein Gelenkmechanismus (16) zum Vorschieben und Zurückziehen des Hauptkörpers (1) unter Verwendung der Halteplatte (15) als Tragepunkt mit einem Drehgriff (16a) zwischen dem Hauptkörper (1) und der Halteplatte (15) angeordnet ist; und ferner, daß die Krone (2) an der Hauptwelle (4) durch Rotation des Griffs an dem Gelenkmechanismus (16) vorwärts bewegt wird, um das Bolzenloch (13) in der Mitte der Schiene (8a) in einer bestimmten Höhe und in einem bestimmten Abstand zu bohren.

## Revendications

1. Dispositif de perçage pour former des trous transversaux à travers l'âme verticale d'un rail de chemin de fer, comprenant des moyens de serrage formés par un bâti de positionnement (6) comportant des butées positionnées de façon à venir en prise avec la surface du rail en des emplacements espacés, une mâchoire de serrage (7) mobile par rapport au bâti de positionnement, une paire de bras parallèles (5) s'étendant à partir du bâti de localisation dans une direction perpendiculaire à l'âme du rail lorsque de bâti de positionnement vient en prise avec le rail, et un corps (1) monté sur les barres pour effectuer un mouvement de coulissement en va-et-vient le long de celles-ci, le corps comprenant des moyens d'entraînement (3) et un dispositif de coupe de perçage (2) pouvant venir en prise avec l'âme du rail de façon à former une ouverture à l'intérieur de celle-ci, caractérisé en ce que ladite mâchoire de serrage (7) peut pivoter par rapport au bâti de positionnement, et en ce qu'un gabarit de hauteur (10) est fixé au bâti de positionnement (6) de façon à être adjacent à l'âme du rail, le gabarit de hauteur étant muni de deux supports de rail intermédiaires latéralement espacés (9a) destinés à venir en prise avec une partie inférieure de l'âme et d'une pluralité de paires latéralement espacées de trous filetés (12) pour recevoir une autre paire de supports de rails (9b) destinés à venir en prise en dessous d'un champignon supérieur du rail, les trous (12) étant positionnés en fonction des hauteurs de perçage nominales de trous de boulon pour différents types de rails de chemin de fer.

2. Dispositif de perçage selon la revendication 1, caractérisé en ce qu'un gabarit de pas (20) est présent, pouvant être fixé au rail et comportant une pluralité de cavités de positionnement (21) espacées dans la direction axiale du rail, dans lequel le bâti de positionnement (6) ou la mâchoire de serrage (7) comprennent une protubérance ou une saillie pouvant coopérer en séquence avec les cavités de positionnement pour fixer le dispositif de perçage dans une pluralité d'emplacements axialement espacés le long du rail.

3. Dispositif de perçage selon la revendication 1 ou la revendication 2, caractérisé en ce que des supports de rail supérieurs (9c) sont fixés au bâti de positionnement (6) pour venir en prise avec le champignon supérieur du rail dans une direction latérale.

4. Dispositif de perçage selon la revendication 1, la revendication 2 ou la revendication 3, caractérisé en ce qu'une vis de serrage rotative (14) pour actionner la mâchoire de serrage (7) est vissée verticalement vers le bas à travers un trou taraudé (7b) disposé à une extrémité supérieure de la mâchoire de serrage au-dessus de l'axe du dispositif de coupe (2).

5. Machine de perçage pour rails de chemin de fer, comprenant une source d'entraînement en rotation (3) fixée à un dispositif de coupe de perçage (2) et enfermée dans un enceinte de corps principal (1), la source d'entraînement étant fixée de telle sorte qu'un arbre de sortie (4) s'étende vers l'extérieur ; des arbres coulissants (5) positionnés sur les côtés de ladite enceinte de corps principal (1) avec ladite source d'entraînement en rotation (3) centrée entre eux ; un bras de serrage (7) muni d'un arbre de support lui permettant de se déplacer librement à l'opposé d'un bâti de positionnement (6), qui est fixé aux extrémités respectives (5a) desdits arbres coulissants (5), des moyens de serrage qui étant configurés par une surface d'agrippement (6a) dudit bâti de positionnement (6) à l'opposé d'un élément de crochet à deux fourchons (7a) en-dessous dudit bras de serrage (7) afin d'agripper un rail de chemin de fer (8) de façon croisée et des deux côtés ; un support de rail supérieur (9c) regardant vers l'intérieur, fixé à l'intérieur de ladite surface d'agrippement (6a) dudit bâti de positionnement (6) , caractérisée en ce qu'un gabarit de hauteur (10) avec un trou traversant (11) percé approximativement en son centre est boulonné à l'intérieur de ladite surface d'agrippement (6a) ; deux supports de rail intermédiaires (9a) sont juxtaposés sur ledit gabarit de hauteur (10) de façon à être séparés par un espace, et différents trous de vis (12) sur lesquels des supports de rail dirigés vers le haut (9b) peuvent être vissés pour les positionner sur ledit gabarit de hauteur (10) selon les hauteurs de perçage nominales de trous de boulon (13) pour chaque type de rail de chemin de fer sont présents sur ledit gabarit de hauteur (10) ; un gabarit de pas (20), sur lequel de nombreux contre-perçages (21) sont positionnés en relation avec l'extrémité dudit rail de chemin de fer (8) ou avec un point spécifié sur celui-ci, de façon à correspondre au pas nominal pour lesdits trous de boulon (13) de chaque type de rail de chemin de fer, est monté avant le perçage sur la surface supérieure dudit rail de chemin de fer (8) devant être percé, de façon à être facilement amovible ; une vis de serrage (14) comportant une poignée rotative (14a) est vissée verticalement vers le bas à travers un cylindre taraudé (7b) sur l'extrémité supérieure dudit bras de serrage (7) sur le centre axial dudit dispositif de coupe (2) ; l'extrémité inférieure (14c) de ladite vis de serrage (14) est alignée avec un contre-perçage spécifique (21) sur ladite jauge de pas (20) et serrée de façon à fixer la position des moyens de serrage, et une pression significative est maintenue de façon perpendiculaire depuis le dessus et le dessous, ainsi que dans une direction horizontale, sur ledit rail de chemin de fer (8), par les moyens de serrage ; une plaque de maintien (15) est fixée sur les extrémités arrière desdits arbres coulissants (5) ; un mécanisme de liaison (16) pour faire avancer et rétracter ladite enceinte de corps principal (1) en utilisant ladite plaque de maintien (15) comme point de support, et comportant une poignée rotative (15a), est positionnée entre ladite enceinte de corps principal (1) et ladite plaque de maintien (15) ; et ledit dispositif de coupe (2) monté sur ledit arbre de sortie (4) est avancé grâce à la rotation de la poignée dudit mécanisme de liaison (16) afin de percer ledit trou de boulon (13) au milieu du rail (8a) à une hauteur spécifiée et avec un pas spécifié.
